# EUROPEAN PATENT SPECIFICATION

(11) **EP 2 423 056 B1**
(45) Date of publication and mention of the grant of the patent: **13.03.2013**
(21) Application number: 10173969.6
(22) Date of filing: 25.08.2010
(51) Int. Cl.: B60R 21/38

(54) **A safety device**
Sicherheitsvorrichtung
Dispositif de sécurité

(43) Date of publication of application: 29.02.2012
(73) Proprietor: Autoliv Development AB, 447 83 Vårgårda (SE)
(72) Inventor: Brygard, Stefan, 417 15 Göteborg (SE); Kuntzsch, Stefan, 524 96 Ljung (SE)
(74) Representative: Beattie, Alex Thomas Stewart

(56) References cited:
- DE-A1- 19 922 454
- DE-A1-102008 011 722

## Description

### Description of Invention

THE PRESENT INVENTION relates to a safety device, and more particularly relates to a safety device to lift the hood or bonnet of a vehicle in the event that the vehicle is involved in a crash situation.

Devices have been proposed previously to lift the rear part of the bonnet of a vehicle if the vehicle crashes into a pedestrian. The bonnet is lifted to increase the distance between the bonnet and the engine block so that the bonnet can deform plastically over a distance if the pedestrian is thrown onto the bonnet. The plastic deformation of the bonnet absorbs energy and provides a cushioning effect to minimise injury to the pedestrian.

A prior proposed bonnet lifting arrangement incorporates a hinge device which allows the bonnet to be opened normally to allow access to the engine. The device also allows the rear part of the bonnet to be lifted by a drive means in a crash situation. The drive means is mounted to part of the vehicle beneath the bonnet. Upon activation, the drive means exerts an upward force on the underside of the bonnet which causes a pin in the hinge device to shear to allow the rear part of the bonnet to be lifted to a raised position.

The prior proposed arrangement requires special mountings to be provided on the vehicle to mount the drive means and the hinge device to the vehicle. The arrangement is therefore limited for use only with vehicles which have been provided with these special mountings.

The shear pin in the prior proposed arrangement must be replaced after the arrangement has been activated. Sourcing and fitting a replacement shear pin adds to the cost of repairing the vehicle and installing a new bonnet lifting arrangement.

DE 10 2008 0011 722 discloses a mechanism with a hinge having a stroke mechanism with a piston and a cylinder for moving two hinge arms from a pivoting position of the hinge arms to a distant position, where the pivoting position corresponds to a closed position of an engine bonnet. The piston is held at the distant position from the cylinder by a detachable friction-fit or form-fit connection to the cylinder. The detachability of the friction-fit or form-fit connection absorbs kinetic energy of a pedestrian caught in the engine bonnet, by a braked displacement from the distant position into the pivoting position.

The present invention seeks to provide an improved safety device.

Accordingly, one aspect of the present invention provides a safety device for use in a vehicle, the device comprising: a first support member which incorporates a mounting member which is configured to be mounted to the bonnet of a vehicle; a second support member which is configured to be mounted to part of a vehicle, the first and second support members being attached to each other pivotally; a drive arrangement, having a housing which is attached to one of the first and second support members and a drive element which may be driven with respect to the housing in a drive direction, the drive element having a substantially wedge-shaped portion and a guide surface which is inclined at an angle relative to the drive direction; and a guide element mounted on the other of the first and second support members, wherein, in an initial position, the guide element is at a first location on the guide surface and, to move from the initial position to an activated position, the drive element is driven with respect to the housing so that the guide element is driven along the guide surface from the first location to a second location, and the guide surface exerts a force on the guide element to drive the first and second support members away from one another in the region of the guide element, and to pivot the first and second support members with respect to one another.

Advantageously, the housing is attached to the first support member and the guide element is mounted on the second support member, and motion of the drive element in the drive direction drives the guide element and the mounting member away from one another.

Conveniently, the guide surface comprises one face of the wedge shape, and wherein the wedge shape is wider in the region of the second location than in the region of the first location.

Advantageously, a slot is formed in the drive element, with the guide surface forming one interior surface of the slot.

Preferably, the slot has a region of reduced width which retains the guide member in the first location, and wherein a part of the slot can deform to widen the region of reduced width and release the guide member from the first location.

Conveniently, a further surface of the wedge-shaped portion is arranged to contact the one of the first and second support members, or a component that is connected to the one of the first and second support members.

Advantageously, a retaining recess is formed in the guide surface, at or near the second location, to retain the guide element at the second location.

Preferably, a deformation arrangement comprising at least one relatively weak region is provided in the drive element, in the region of the second location, to allow the drive element to deform in response to an impact on the vehicle bonnet when the drive element is in the activated position.

Conveniently, the deformation arrangement comprises at least one aperture or region of reduced thickness or of a softer material.

Advantageously, the safety device comprises a handle which may be used to return the drive element from the activated position to the initial position following activation.

Preferably, a guide slot is formed in the one of the first and second support members, with the guide element being received in the guide slot.

Conveniently, when the guide element is in the first location, the guide element is at or near a first end of the guide slot, and when the guide element is at the second location, the guide element is at or near the second end of the guide slot.

Another aspect of the present invention provides a vehicle comprising a safety arrangement according to any preceding claim.

In order that the present invention may be more readily understood, the embodiments will now be described, by way of example, with reference to the accompanying drawings, in which:
FIGURES 1 and 2 show a drive arrangement and mounting member suitable for use with the present invention, in initial and activated positions, respectively; and
FIGURES 3 and 4 show a safety device according to the present invention in initial and deployed positions, respectively.

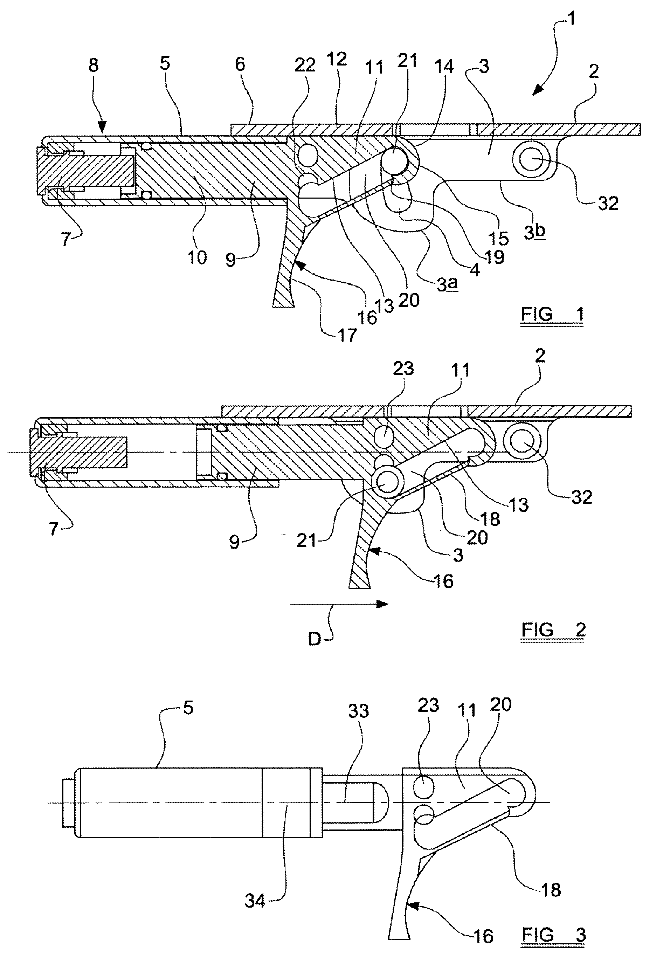

Referring firstly to Figure 1, a bonnet attachment element 1 has a mounting member 2 which is generally planar and elongate, and is adapted to be attached to the underside of the rear part of a vehicle bonnet (not shown). A protrusion 3 extends downwardly from a lower side of the mounting member 2, the protrusion 3 being generally planar and arranged substantially at right angles with respect to the plane of the mounting member 2, being aligned with the forward/backward direction of the bonnet. The protrusion 3 has a main part 3a which is preferably provided at or near the middle of the length of the mounting member 2 and has a slot 4 formed therein, which is preferably curved and which extends substantially along the length of the protrusion 3. The protrusion 3 also has a secondary part 3b which extends towards a forward end of the bonnet attachment element 1. The secondary part 3b does not protrude away from the plane of the mounting member 2 as far as the main part 3a. At a forward end of the secondary part 3b an attachment hole 32 is formed.

A housing 5 is attached to the underside of the mounting member 2. In the depicted embodiment the housing 5 is located at the rear edge 6 of the mounting member 2, and extends backwardly from the rear edge 6, being arranged so that its longitudinal axis is substantially parallel with the mounting member 2, and points generally in the forward/backward direction of the vehicle bonnet. In the embodiment shown, the housing 5 is generally cylindrical, but the housing 5 may equally have a cross-section that is rectangular or of any other suitable shape.

A pyrotechnic squib 7 is provided in a rear end 8 of the housing 5, and is connected to be triggered by a signal from a control unit (not shown) of the vehicle.

A drive element 9 is also mounted in the housing 5. The drive element 9 comprises an elongate base portion 10, which, in the initial position shown in Figure 1, substantially fills the front part of the housing which is not occupied by the squib 7. A front portion 11 of the drive element 9 protrudes from the front, open end of the housing 5. The front portion 11 is generally wedge-shaped, having a generally flat top surface 12 which lies against the underside of the mounting member 2, and may slide with respect thereto. A guide surface 13 is inclined at an angle with respect to the top surface 12, so that the distance between the guide surface 13 and the top surface 12 is relatively great near the housing 5, and becomes progressively narrower towards the tip 14 of the front portion 11.

The top surface 12 and the guide surface 13 define the wedge shape of the front portion 11. In preferred embodiments of the invention the angle between the top surface 12 and the guide surface 13 is around 27°, although it has been found that any angle of less than 45° may be used. In preferred embodiments the angle is between 5° and 45°, or between 10° and 40°. It is also envisaged that the angle may vary along the length of the guide surface 12, with the guide surface being curved or otherwise changing direction along its length.

At the tip 14 of the front portion 11 a hooked portion 15 is formed, which curves away from the plane of the top surface 12 and defines a recess. A handle 16 projects from a point at or near the widest part of the front portion 11, in a direction generally away from the top surface 12. The handle 16 has a recess 17 formed therein so that it may be easily grasped by a user.

A retaining gate 18 projects from a point near the base of the handle 16 and extends towards the free end 19 of the hooked portion 15. The retaining gate 18 may be connected to, or integrally formed with, the handle 16. The retaining gate 18 preferably contacts, in a default position, the free end 19 of the hooked portion 15.

The guide surface 13, the hooked portion 15, the retaining gate 18 and the base of the handle 16 together form an enclosed, elongate slot 20 within the front portion 11, which is inclined at an angle to the top surface 12 of the front portion 11. The width of the slot 20 is approximately equal to the width of the slot 4 that is formed in the projection 3 of the bonnet attachment element 1. A guide element, which in the depicted embodiment takes the form of a pin 21, may pass through the slots 20, 4 formed in the drive element 9 and the projection 3, as is shown in 1. The retaining gate 18 may deflect to allow the pin 21 to be introduced into the slot 20. In an initial position, which is shown in Figure 1, the front end of the slot 20 formed in the drive element (i.e. a part of the slot defined by the hooked portion 15) is aligned with a top end of the slot 4 formed in the projection 3 (i.e. the part of the slot 20 closest to the mounting member 2).

In certain embodiments the slot 20 may not be entirely enclosed. For instance, the hooked portion 15 may be omitted, leaving the slot 20 open at its front end.

When the pyrotechnic squib 7 is activated, the drive element 9 is driven forwardly with respect to the housing 5 in a drive direction. Figure 2 shows the situation following this motion. The drive direction is indicated by D in Figure 2.

As the drive element 9 is driven forwardly with respect to the housing 5, the pin 21, which passes through the slots 20, 4 in the front portion 11 and the protrusion 3, is driven by the inclined guide surface 13 away from the top surface 12 of the front portion 11, and travels downwardly along the slot 4 formed in the protrusion 3. This motion comes to an end when the pin 21 reaches the end of either of the slots 20, 4. In preferred embodiments, the slots 20, 4 are configured so that, in an activated position (as shown in Figure 2) the pin 21 arrives at the end of both slots 20, 4 substantially simultaneously.

It will therefore be understood that the motion of the drive element 9 forces the mounting member 2 upwardly (in the orientation shown in Figures 1 and 2) with the wedge shape of the front portion 11 forcing the pin 21 away from the mounting member 2.

In preferred embodiments, as can be seen in Figure 1, at the rear end of the slot 20 formed in the front portion 11 (i.e. the end where the pin 21 is located in the activated position), a recess 22 may be formed in the guide surface 13. This helps to retain the pin 21 at the rear end of the slot 20 following driving of the drive element 9.

In some embodiments the width of the slot 20 decreases towards the rear end thereof, to provide increased resistance towards the end of the relative motion between the pin 21 and the drive element 9.

A deformation aperture 23 is formed through the front end 11, between the top surface 12 and the rear end of the slot 20. The purpose of this deformation aperture 23 will be explained below.

The top surface 12 that contacts the underside of the mounting member 12 may take the form of a further guide slot, along which a pin or other guide member that is attached to the mounting member 12 may travel.

Figure 3 shows the housing 5 and drive element 9 in isolation. In this figure a cut-out region 33 is present in the elongate base portion 10 of the drive element 9. A vertical pin or other retention member (not shown) may be provided within the housing 5, which is received in the cut-out region 33 and is too wide for the regions of the drive element 9 to either side of the cut-out region to move past the retention member. This therefore limits the range of motion of the drive member 9. An attachment region 34, at which the housing 5 is attached to the mounting member 2 is also shown in this figure.

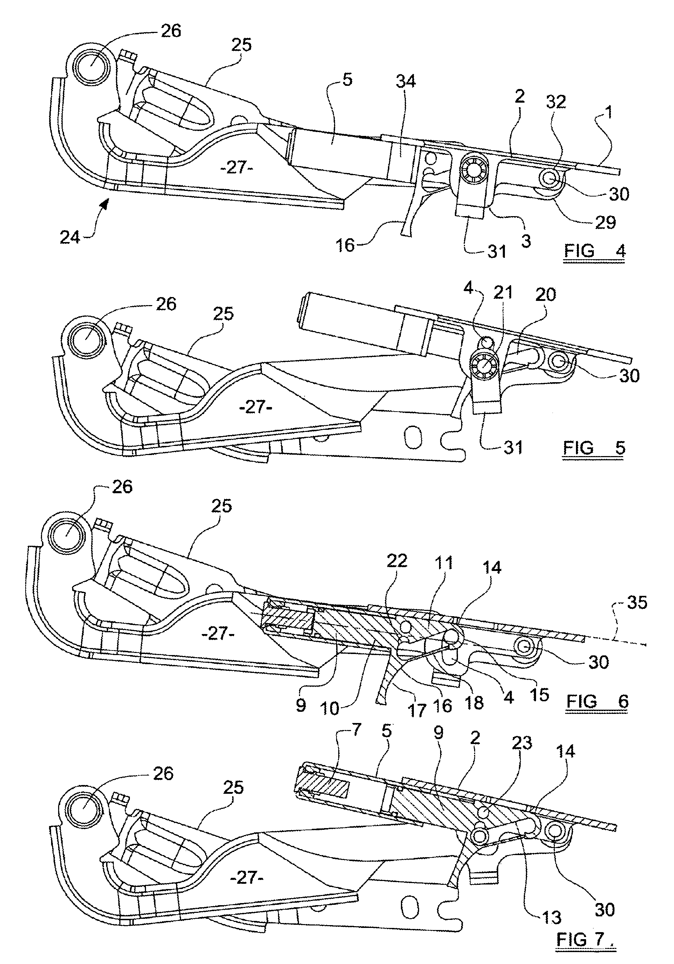

Figures 4 and 5 show the arrangement described above incorporated into a hinge arrangement 24 for use with the rear part of a vehicle bonnet (not shown) before and after activation of the squib 7, respectively. Figures 6 and 7 show corresponding views but with certain components cut away for clarity.

Turning to figure 4, a main support 25 is adapted to be connected to a part of the vehicle chassis, and the main support 25 supports a main hinge 26 which is used to pivot the bonnet upwardly about its rear edge, in the normal way. A bonnet arm 27 is also attached to the main hinge 26, and is adapted to carry, and support the weight of, the bonnet.

In the embodiments shown in Figures 4 and 5, the pivot point 32 of the bonnet attachment element 1 is attached to a point near the distal end 29 of the bonnet arm 27 by a pivot 30. A pin 21 (shown in Figures 6 and 7) which is attached to the bonnet arm 27 passes through the slots 20, 4 formed in the front portion 11 and projection 3. In Figures 3 and 4 the pin is obscured by a pin support 31, which in the depicted embodiment simply comprises a U-shaped bracket, including a starlock washer provided to hold the pin 21 in place.

The bonnet itself is attached to the mounting member 2, and is not directly attached to the bonnet arm 27.

Figures 4 and 6 show the situation before the pyrotechnic squib 7 has been activated. The bonnet is disposed at a first, normal angle, and the bonnet may be pivoted upwardly around the main pivot 26, with the bonnet arm 27 and bonnet attachment element 1 pivoting together to allow the front edge of the bonnet to be lifted in the normal way. It will be understood that, since the bonnet attachment element 1 is attached to the bonnet arm 27 at two points (namely via the pin 21, which is locked in place by the hooked portion 15 of the slot 20 which is formed in the front portion 11 and the attachment of the housing 5 to the mounting member 2, the bonnet is held in position with respect to the bonnet arm 27 in the initial position.

Figures 5 and 7 show the situation once the pyrotechnic squib 7 has been activated. As discussed above in relation to Figures 1 and 2, the wedge-shape of the front portion 11 of the drive element 9 forces the pin and the mounting member 2 apart from one another, thus driving the bonnet attachment element 1 and the bonnet arm 27 away from one another in the region of the pin. This action lifts the bonnet away from the bonnet arm 27 in the region of the projection 3. Since the front end of the bonnet is not able to move downwardly (as it will be in contact with another part of the vehicle), the rear end of the bonnet is lifted and the angle of the bonnet with respect to the horizontal becomes steeper. The bonnet arm 27 pivots upwardly around the main pivot 26 as this occurs, around the latch of the front edge of the bonnet, shown schematically at 35 in figure 6.

It will be understood that the distance between the main part 3a of the protrusion 3 and the pivot 30 between the secondary part 3b of the protrusion 3 and the bonnet arm 27 influences the angle through which the bonnet can lift during activation.

It can therefore be seen that activation of the pyrotechnic squib 7 causes the rear end of the bonnet to be lifted, creating a distance between the bonnet and the engine block. As discussed above, this will provide valuable protection for a pedestrian who is struck head-on by the vehicle.

It will be understood that the slots 20, 4 formed in the front portion 11 and in the protrusion 3 limit the range of motion of the bonnet. The drive member 9 can not, therefore, be pulled out of the housing 5 by an upward force applied to the bonnet after activation. This is further resisted due to the presence of the cut-out portion 33 formed in the drive element 9 which, as discussed above, limits the range of motion of the drive element 9 in conjunction with a suitable retaining element.

As discussed above, a deformation aperture 23 is formed in the front portion 11, between the rear end of the slot 20 and the top surface 12. This allows for greater and/or less abrupt deformation of the front portion 11 as a pedestrian or other object strikes the top of the bonnet following activation. One or more deformation apertures may be provided, or indeed a weakened region, such as a region of reduced thickness or of a softer material, may be formed in place of an aperture. Any deformation arrangement that results in a region of relative weakness may be used.

As discussed above, at least a part of the guide surface may be curved, and in some embodiments the rear end of the guide surface 13 may be parallel or substantially parallel with the plane of the mounting member 2. It will be appreciated that, in these embodiments, once the pin 21 has reached the rear end of the slot 20 there will be no tendency for the weight of the bonnet, or for the impact of a pedestrian onto the bonnet, to force the drive element 9 to return into the housing 5. The bonnet will therefore remain in its lifted position for a long period of time, thus ameliorating a problem associated with prior lifters, which rely on gas pressure to maintain the bonnet in a lifted position.

If the pyrotechnic squib 7 has been fired accidentally, or if it was fired as a precaution and the vehicle was not involved in a collision with a pedestrian, the user may re-set the system by pushing the handle 16 rearwardly to draw the drive element 9 back into the housing 5. The pin 21 will slide along an internal surface of the retaining gate 18 as this occurs. The drive element 9, housing 5 and squib 7 will need to be replaced in a workshop following an activation.

In preferred embodiments the distance between the tip of the hooked portion and the guide surface 13 is slightly less than the diameter of the pin 21. This means that the pin 21 is held firmly in place prior to activation. During activation the pin 21 and drive element 9 are drive with respect to one another with sufficient force for the hooked portion 15 to deflect and release the pin 21.

The hooked portion 15 therefore replaces the shear pin of prior designs. In addition, when the system is reset, as described above, the pin 21 can be relatched by forcing the pin 21 past the tip of the hooked portion 15 so that it is once again held in place.

This arrangement has several advantages with respect to prior art arrangements.

Firstly, the present invention may be used to attach a bonnet to the bonnet support of almost any vehicle, and no special adaptation of the bonnet support or other components of the vehicle is required.

Further, the drive element 9 may be formed from a plastic material, which is cheap and light, and will not corrode other components of the vehicle, particularly if the bonnet lifting arrangement remains "dormant" for a long period of time.

It will be understood that the drive arrangement could be mounted on the bonnet support, and a pin or other guide element could be provided as part of the bonnet attachment element, as an alternative to the arrangement described above.

It will be appreciated that embodiments of the present invention will provide a flexible, robust bonnet lifting arrangement which can readily be applied to many different types of vehicle.

When used in this specification and claims, the terms "comprises" and "comprising" and variations thereof mean that the specified features, steps or integers are included. The terms are not to be interpreted to exclude the presence of other features, steps or components.

## Claims

1. A safety device for use in a vehicle, the device comprising:
a first support member (1) which incorporates a mounting member (2) which is configured to be mounted to the bonnet of a vehicle;
a second support (27) member which is configured to be mounted to part of a vehicle, the first and second support members (1, 27) being attached to each other pivotally;
a drive arrangement, having a housing (5) which is attached to one of the first and second support members (1, 27) and a drive element (9) which may be driven with respect to the housing (5) in a drive direction (D) **characterized in that** the drive element (9) is having a substantially wedge-shaped portion (11) and a guide surface (13) which is inclined at an angle relative to the drive direction (D); and
a guide element (21) is mounted on the other of the first and second support members (1,27),
wherein, in an initial position, the guide element (21) is at a first location on the guide surface (13) and, to move from the initial position to an activated position, the drive elemen (9) is driven with respect to the housing (5) so that the guide element (21) is driven along the guide surface (13) from the first location to a second location, and the guide surface (13) exerts a force on the guide element (21) to drive the first and second support members (1, 27) away from one another in the region of the guide element (21), and to pivot the first and second support members (1, 27) with respect to one another.

2. A safety device according to claim 1, wherein the housing (5) is attached to the first support member (1) and the guide element (21) is mounted on the second support member (27), and motion of the drive element (9) in the drive direction (D) drives the guide element (21) and the mounting member (2) away from one another.

3. A safety device according to claim 1, wherein the guide surface (13) comprises one face of the wedge shape, and wherein the wedge shape is wider in the region of the second location than in the region of the first location.

4. A safety device according to claim 3, wherein a slot (20) is formed in the drive element (9), with the guide surface (13) forming one interior surface of the slot (20).

5. A safety device according to claim 4, wherein the slot (20) has a region of reduced width which retains the guide member (21) in the first location, and wherein a part of the slot (20) can deform to widen the region of reduced width and release the guide member (21) from the first location.

6. A safety device according to any one of claims 3 to 5, wherein a further surface (12) of the wedge-shaped portion (11) is arranged to contact the one of the first and second support members (1, 27), or a component that is connected to the one of the first and second support members (1, 27).

7. A safety device according to any preceding claim wherein a retaining recess (22) is formed in the guide surface (13), at or near the second location, to retain the guide element (21) at the second location.

8. A safety device according to any preceding claim wherein a deformation arrangement comprising at least one relatively weak region is provided in the drive element (9), in the region of the second location, to allow the drive element (9) to deform in response to an impact on the vehicle bonnet when the drive element (9) is in the activated position.

9. A safety device according to claim 8, wherein the deformation arrangement comprises at least one aperture (23) or region of reduced thickness or of a softer material.

10. A safety device according to any preceding claim, comprising a handle (16) which may be used to return the drive element (9) from the activated position to the initial position following activation.

11. A safety device according to any preceding claim, wherein a guide slot (4) is formed in the one of the first and second support members (1 27), with the guide element (21) being received in the guide slot (4).

12. A safety device according to claim 11 wherein, when the guide element (21) is in the first location, the guide element (21) is at or near a first end of the guide slot (4), and when the guide element (21) is at the second location, the guide element (21) is at or near the second end of the guide slot (4).

13. A vehicle comprising a safety device according to any preceding claim.

## Patentansprüche

1. Eine Kartenbearbeitungsvorrichtung (2) zum Bilden einer zufälligen Menge von Spielkarten, die Folgendes beinhaltet:
eine obere Fläche (4) und eine untere Fläche der Vorrichtung (2);
einen Kartenaufnahmebereich (6) zum Aufnehmen einer Anfangsmenge von Spielkarten;
einen Prozessor, der mit der Vorrichtung kommunikativ assoziiert ist;
ein Zufallsordnungssystem zum zufälligen Ordnen der Anfangsmenge von Spielkarten;
eine Erfassungsfläche in einem Kartenerfassungsbereich zum Aufnehmen zufällig geordneter Spielkarten, wobei die Erfassungsfläche Karten aufnimmt, sodass alle Karten unter der oberen Fläche (4) der Vorrichtung (2) aufgenommen werden;
einen Heber (156) mit einer Kartentrageplattform zum Hochheben der Erfassungsfläche, sodass mindestens einige zufällig geordnete Karten mindestens auf die obere Fläche der Vorrichtung gehoben werden;
mindestens einen Sensor zum Abtasten a) einer Position der Plattform und/oder b) einer Höhe der Plattform und/oder c) einer Position einer Karte im Heber und/oder d) einer Höhe einer Karte oder von Karten im Heber und/oder e) eines auf eine Karte im Heber ausgeübten Drucks und/oder f) eines Vorhandenseins der Plattform auf einer vorbestimmten Höhe und/oder g) eines Vorhandenseins der Plattform an einer vorbestimmten Position und/oder h) eines Vorhandenseins einer Karte / von Karten auf der Plattform und/oder i) eines Nichtvorhandenseins einer Karte / von Karten auf der Plattform, wobei
der Prozessor und der mindestens eine Sensor ein automatisches Kalibriersystem beinhalten, um die Vorrichtung (2) automatisch zu kalibrieren, um zu ermöglichen, dass die Vorrichtung (2) Karten akkurat bearbeitet.

2. Vorrichtung (2) gemäß Anspruch 1, wobei der Heber (156) alle zufällig geordneten Karten über die obere Fläche (4) der Vorrichtung (2) hochhebt.

3. Vorrichtung (2) gemäß Anspruch 2, wobei eine begrenzende Menge von Wänden alle zufällig geordneten Karten entlang mindestens zwei Rändern der Spielkarten begrenzt, nachdem die zufällig geordneten Karten gehoben worden sind.

4. Vorrichtung (2) gemäß Anspruch 1, wobei mindestens eine Abnahmerolle Karten einzeln nacheinander vom Kartenaufnahmebereich entfernt und Karten einzeln nacheinander zum Zufallsordnungssystem hin bewegt.

5. Vorrichtung (2) gemäß Anspruch 4, wobei der Prozessor die Bewegung der Abnahmerolle und mindestens eines Paars Rollen, die das Bewegen von Karten zwischen dem Kartenaufnahmebereich (106) und dem Erfassungsbereich unterstützen, steuert.

6. Vorrichtung (2) gemäß Anspruch 1, wobei das Zufallsordnungssystem eine Karte nach der anderen in einen über dem Erfassungsbereich liegenden Bereich bewegt.

7. Vorrichtung (2) gemäß Anspruch 1, wobei eine Karte nach der anderen in eine zufällig geordnete Menge von Spielkarten über dem Erfassungsbereich positioniert wird.

8. Vorrichtung (2) gemäß Anspruch 1, wobei die Kartentrageplattform von einem Beweger bewegt wird, der über inkrementelle vertikale Distanzen, die geringer als die Dicke einer Spielkarte sind, bewegen kann.

9. Vorrichtung (2) gemäß Anspruch 8, wobei der Beweger ein Schrittmotor ist.

10. Vorrichtung (2) gemäß einem vorhergehenden Anspruch, die ferner Greifer beinhaltet.

11. Ein Verfahren zum Kalibrieren einer Kartenbearbeitungsvorrichtung (2), wobei die Vorrichtung (2) Folgendes beinhaltet:
einen Kartenaufnahmebereich (6);
einen Kartenstapelbereich;
einen Heber (156) mit einer Kartentrageplattform;
einen Prozessor; und
mindestens einen Sensor zum Abtasten a) einer Position der Plattform und/oder b) einer Höhe der Plattform und/oder c) einer Position einer Karte im Heber und/oder d) einer Höhe einer Karte oder von Karten im Heber und/oder e) eines auf eine Karte im Heber ausgeübten Drucks und/oder e) eines Vorhandenseins der Plattform auf einer vorbestimmten Höhe und/oder f) eines Vorhandenseins der Plattform an einer vorbestimmten Position und/oder g) eines Vorhandenseins einer Karte / von Karten auf der Plattform und/oder h) eines Nichtvorhandenseins einer Karte / von Karten auf der Plattform, wobei das Verfahren Folgendes beinhaltet:
Überwachen des mindestens einen Sensors, um die Vorrichtung (2) automatisch zu kalibrieren, um zu ermöglichen, dass die Vorrichtung (2) Karten akkurat bearbeitet.

12. Verfahren gemäß Anspruch 11, das ferner Folgendes beinhaltet:
Bestimmen einer durchschnittlichen Kartendicke.

13. Verfahren gemäß Anspruch 11 oder Anspruch 12, das ferner Greifer beinhaltet, wobei das Verfahren ferner Folgendes beinhaltet:
automatisches Definieren einer Greifposition auf Karten im Stapelbereich und
automatisches Identifizieren einer Heberhöhe, die einer Höhe, auf der eine individuelle Karte auf der Kartentrageplattform gegriffen wird, entspricht, und wobei die Bewegung der Plattform in eine niedrigere Position mindestens einer Kartendicke nicht einmal das Abgreifen einer individuellen Karte von der Kartentrageplattform zuließe.

14. Verfahren gemäß Anspruch 11, das ferner Folgendes beinhaltet:
Messen einer Höhe des Hebers (156) an einer vorbestimmten Stelle;
Laden und zufälliges Ordnen aller Karten;
Messen einer Höhe einer oberen Karte des Stapels von Karten auf dem Heber (156); und
danach Verwenden dieser Informationen zusammen mit Kartenzählungsinformationen, um eine durchschnittliche Kartendicke zu bestimmen.

## Revendications

1. Dispositif de manipulation de cartes (2) pour former un ensemble aléatoire de cartes à jouer, comprenant :
une surface supérieure (4) et une surface inférieure dudit dispositif (2);
une zone de réception des cartes (6) pour recevoir un ensemble initial de cartes à jouer ;
un processeur associé en communication avec le dispositif ;
un système de randomisation pour randomiser l'ensemble initial de cartes à jouer;
une surface de collecte dans une zone de collecte des cartes pour recevoir les cartes à jouer randomisées, la surface de collecte recevant les cartes de manière à ce que toutes les cartes soient reçues au-dessous de la surface supérieure (4) du dispositif (2);
un élévateur (156) doté d'une plateforme de support de cartes pour soulever la surface de collecte de manière à ce qu'au moins plusieurs cartes randomisées soient élevées au moins jusqu'à la surface supérieure du dispositif;
au moins un capteur pour capter au moins une de a) la position de la plateforme, b) la hauteur de la plateforme, c) la position d'une carte dans l'élévateur, d) la hauteur d'une ou plusieurs cartes dans l'élévateur, e) la pression exercée sur une carte dans l'élévateur, f) la présence de la plateforme à une hauteur prédéterminée, g) la présence de la plateforme à une position prédéterminée, h) la présence d'une ou plusieurs cartes sur la plateforme et i) l'absence de cartes sur la plateforme, où
le processeur et le au moins un capteur comprennent un système automatique de calibration pour calibrer automatiquement le dispositif (2) afin de permettre au dispositif (2) de manipuler les cartes avec précision.

2. Dispositif (2) conforme à la revendication 1, où l'élévateur (156) élève toutes les cartes randomisées au-dessus de la surface supérieure (4) du dispositif (2).

3. Dispositif (2) conforme à la revendication 2, où un ensemble de parois de confinement confine toutes les cartes randomisées le long d'au moins deux bords des cartes à jouer une fois que les cartes randomisées sont élevées.

4. Dispositif (2) conforme à la revendication 1, où au moins un rouleau d'aspiration retire les cartes une par une de la zone de réception des cartes et déplace les cartes une à la fois vers le système de randomisation.

5. Dispositif (2) conforme à la revendication 4, où le processeur commande le mouvement du rouleau d'aspiration et d'au moins une paire de rouleaux qui aident à déplacer les cartes entre la zone de réception des cartes (106) et la zone de collecte.

6. Dispositif (2) conforme à la revendication 1, où le système de randomisation déplace une carte à la fois dans une zone recouvrant la zone de collecte.

7. Dispositif (2) conforme à la revendication 1, où une carte à la fois est placée dans un ensemble randomisé de cartes à jouer sur la surface de collecte.

8. Dispositif (2) conforme à la revendication 1, où la surface de support des cartes est déplacée par un dispositif moteur apte à se déplacer sur des distances verticales incrémentielles qui sont inférieures à l'épaisseur d'une carte à jouer.

9. Dispositif (2) conforme à la revendication 8, où le dispositif moteur est un moteur pas-à-pas.

10. Dispositif (2) conforme à une quelconque des revendications précédentes, comprenant de plus des pinces.

11. Procédé pour calibrer un dispositif de manipulation de cartes (2), le dispositif (2) comprenant :
une zone de réception des cartes (6) ;
une zone d'empilage des cartes;
un élévateur (156) doté d'une plateforme de support de cartes ;
un processeur ; et
au moins un capteur pour capter au moins une de a) la position de la plateforme, b) la hauteur de la plateforme, c) la position d'une carte dans l'élévateur, d) la hauteur d'une ou plusieurs cartes dans l'élévateur, e) la pression exercée sur une carte dans l'élévateur, e) la présence de la plateforme à une hauteur prédéterminée, f) la présence de la plateforme à une position prédéterminée, g) la présence d'une ou plusieurs cartes sur la plateforme et h) l'absence de cartes sur la plateforme, le procédé comprenant l'étape consistant à :
surveiller le au moins un capteur pour calibrer automatiquement le dispositif (2) afin de permettre au dispositif (2) de manipuler les cartes avec précision.

12. Procédé conforme à la revendication 11, comprenant en outre l'étape consistant à :
déterminer une épaisseur moyenne de carte.

13. Procédé conforme à la revendication 11 ou la revendication 12, comprenant de plus des pinces, le procédé comprenant en outre les étapes consistant à:
définir automatiquement une position de saisie sur les cartes situées dans la zone d'empilage ; et
identifier automatiquement une hauteur d'élévateur correspondant à une hauteur à laquelle une seule carte sur la plateforme de support des cartes est saisie, et où le mouvement de la plateforme à une position plus basse d'au moins une épaisseur de carte ne permettrait pas à même une seule carte d'être saisie et retirée de la plateforme de support des cartes.

14. Procédé conforme à la revendication 11, le procédé comprenant en outre les étapes consistant à :
mesurer une hauteur de l'élévateur (156) à un emplacement prédéterminé;
charger et randomiser toutes les cartes ;
mesurer une hauteur d'une carte supérieure de la pile de cartes sur l'élévateur (156); et
utiliser ensuite cette information ainsi que l'information sur le nombre de cartes pour déterminer une épaisseur moyenne de carte.
